Europäisches Patentamt

European Patent Office

Office européen des brevets

(11) Publication number: **0 206 564**
**B1**

(12) **EUROPEAN PATENT SPECIFICATION**

(45) Date of publication of patent specification: **04.04.90**

(51) Int. Cl.⁵: **F 16 B 23/00**

(21) Application number: **86304158.8**

(22) Date of filing: **02.06.86**

(54) Screw driving socket.

(30) Priority: **03.06.85 US 740682**

(43) Date of publication of application:
**30.12.86 Bulletin 86/52**

(45) Publication of the grant of the patent:
**04.04.90 Bulletin 90/14**

(84) Designated Contracting States:
**CH DE FR GB IT LI SE**

(56) References cited:
**CA-A-1 169 277**
**GB-A-1 006 509**
**GB-A-1 491 515**
**US-A-2 082 748**
**US-A-2 216 381**
**US-A-2 369 853**
**US-A-2 397 216**

(73) Proprietor: **ISOTECH CONSULTANTS INC.**
**7 Tallforest Court**
**Etobicoke Ontario, M9C 2X1 (CA)**

(72) Inventor: **Dreger, Geoffrey**
**7 Tallforest Court Etobicoke**
**Ontario, qC 2X1 (CA)**

(74) Representative: **Gura, Henry Alan et al**
**MEWBURN ELLIS & CO. 2/3 Cursitor Street**
**London EC4A 1BQ (GB)**

Courier Press, Leamington Spa, England.

## Description

This invention relates to the driving sockets of screws.

It is known (from for example U.S. patent No. 2082748, Brown) to provide a combined driving socket that accepts either of both a square driver and a cross-point driver. In such a socket, the square recess is defined by four nearly vertical faces, and the cross recess by four wings disposed diagonally across the corners of the square, the wings each being defined by a pair of nearly vertical side walls and an end wall.

The term "vertical" applies only when the axis of the screw is itself vertical, but is used throughout the specification for clearer definition. The expression "nearly vertical" means that the faces and walls in question have a draft angle of one or two degrees to permit easy withdrawal of a punch, or of a driver, from the socket, but apart from that the faces are, in substance, vertical.

It is known that the sharp corners of a square socket can give rise to crack producing stress concentration. The sharp corner is undesirable also because the extreme corner of the punch that has to form the sharp corner quickly becomes dulled and rounded due to the intense wear pressure at that point, and once the corner is no longer sharply formed, then the square driver cannot pass fully down into the square socket.

It can be inferred from the said U.S. patent, that in order for substantially the whole length of the end wall to be clear of the square corner, the end wall must slope very steeply. The disadvantage here is that the cross-point driver is now not of the standard cross-point form called the Phillips form: its blade edges slope more steeply, and it is blunter, as the patent shows. It could also be inferred that substantially the whole length of the end wall may be kept clear of the square corner if the end wall is positioned a long way from the axis of the screw. In this case, even though the angle of the end wall may be correct for the Phillips driver, the size of the Phillips driver that will be needed for the combination socket is enormous compared with the size of the standard square driver, or Robertson driver, that that socket needs.

In my earlier Canadian patent 1,169,277, there is disclosed a combined socket for both Robertson and Phillips drivers. The socket has conventional vertical side faces forming a square for the Robertson driver. The faces are inclined so that, as is known, they are engaged by a Robertson driver at the top. For the Phillips driver four wings are provided extending diagonally from the corners. The wings have nearly vertical and parallel side walls and a curved end wall. The curved end wall enables a standard size Phillips screw driver to be used whilst still enabling a Robertson driver to fully engage the socket.

The provision of curved end walls also means that the Phillips drive contacts these end walls below the top of the socket. However, the Robertson driver still contacts the socket at top. This has a number of disadvantages. It means that stress resulting from the torque applied by the driver is greatest at the top, and this can effectively reduce the maximum torque that can be applied. It is necessary for the top of the vertical side faces to be formed accurately. But, in manufacture, the part of the punch forming the corners between the top face and upper parts of the vertical side faces tends to wear quickly, necessitating frequent changes of the punch.

At the present time, a large number of different techniques are used for producing Robertson drivers and screw sockets. A common problem with all known techniques is the necessity to maintain fairly tight tolerances on items, that are mass-produced. Conventional drivers are dimensioned, so as to have sides that are more steeply sloped than sides of corresponding sockets. As a result, when properly dimensioned the driver will engage a socket near the top of the socket. This can produce a desirable cling effect, which helps maintain a screw on the driver, prior to inserting the screw in a socket.

However, by having different angles between the driver and recess sides, problems can arise, due to poor tolerances. One can have insufficient penetration of the driver into the socket, resulting in insufficient torque application and/or premature wear of the driver. Alternatively, the driver might engage fully to the bottom, resulting in loose fit or wobble.

Another problem in known arrangements is poor tolerances resulting in the driver primarily engaging a socket at the corners. This can result from wear of the punch giving a large radius to the socket corners, or build up in the corners of a plated screw. In either case, the driver will engage primarily at the corners causing undesirable stress concentrations.

It is desirable in a combined socket for the part accommodating the Robertson driver to engage between the top and the bottom of the socket. Then, the maximum stresses will occur at this point, and it should be possible to transmit a greater torque. Further, the socket design should be such that the torque is transmitted by abutting faces or at at least along nominal line contacts, rather than point contacts. This avoids excessive stress concentrations. Further, the socket design should be such that it permits large tolerances of places corresponding to areas of greatest punch wear. This increases punch life.

According to the present invention there is provided a screw having a combined driving socket adapted to receive individually both a square, Robertson driver, and a cross-point, Phillips driver, the Robertson and Phillip drivers being of standard sizes conventionally associated with the screw size, the combined driving socket comprising, in vertical position of the screw, four nearly vertical side faces that together define a square recess adapted to receive a square, Robertson driver, with each of said four side faces having an upper portion that is at a greater angle to the vertical than the side faces of conventional Robertson driver and a lower portion that is at a smaller angle to the vertical than the side faces of a conventional Robertson driver, whereby, in use, a Robertson driver will engage the side faces partway along their height; and four wings disposed diagonally with respect to the square recess and extending outwardly from the corners of the square recess, each of the wings being defined by a pair of nearly vertical and generally parallel side walls and a curved end wall, each of which curved end walls is convex and has a deepest zone that is nearly vertical, a relieving zone adjacent the top of the socket that is at an angle to the vertical substantially greater than $26\frac{1}{2}°$, and a driver engaging zone intermediate the deepest and relieving zones, which driver engaging zone is at an angle of substantially $26\frac{1}{2}°$ to the vertical, whereby the wings define a cross-slot shaped recess adapted to receive a standard cross-point Phillips driver with the blades of the driver contacting the driver engaging zones of the end walls, the provile of the cross-slot shaped recess permitting ready disengagement of the Phillips driver, and, when such a standard cross-point Phillips driver is at a small angle to the axis of the screw, the curved end walls enable positive engagement of that driver with its blades contacting the end walls of the wings.

The present invention thus provides a socket in which both Phillips and Robertson drivers can be received and engage the socket below the top. This enables high torques to be transmitted. Further, such a configuration does not require tight tolerances. As the drivers do not engage at corners, where punches tend to wear rapidly, it is not so important that tight tolerances are maintained at the corners. It is expected that this should enable punch life to be extended.

By providing wings at the corners of the Robertson socket, the present invention can eliminate any problems due to poor corner tolerances. The corners are now in the wings and there it is not so important to have tight tolerances. Thus, a Robertson driver can engage fully across four faces between the top and bottom of the socket. For curved side walls, the contact is theoretically a line contact, although in practice there will be substantial areas in contact. Preferably each side wall includes a portion between the top and the bottom which is at the same angle as the sides of the driver, so that there is a uniform distribution of the stress. Such a design should be capable of absorbing poor tolerances whilst still enabling full engagement of both Robertson and Phillips drivers.

The invention will now be further described with reference to the accompanying drawings in which:

Fig. 1 is a magnified plan of a screw having a driving socket;

Fig. 2 is a section on line II—II of Fig. 1;

Fig. 3 is a section on line III—III of Fig. 1;

Fig. 4 is the same section as Fig. 2, but shows a driver in the socket;

Fig. 5 is the same section as Fig. 3, and shows the same driver in the socket;

Fig. 6 shows a similar section to Figures 3 and 5, showing another embodiment of the socket, with the same driver as Figures 3 and 5;

Fig. 7 is the same section as Fig. 2 and 4, but shows a different driver in the socket;

Fig. 8 is a magnified elevation of a punch.

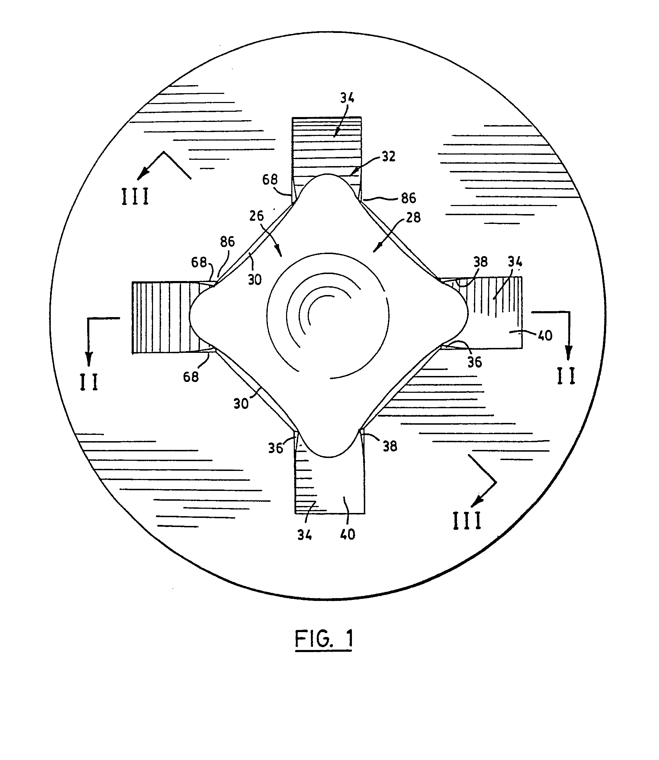

In Figures 1—7, there is shown a screw 20 having a countersunk head 22, which has an upper surface 24. Punched into this upper surface 24 is a driving socket 26. The socket 26 is specially adapted to receive either of a Robertson driver or a Phillips driver conventionally associated with the screw size. Whilst, for simplicity, the figures show a screw having a countersunk head, it is to be appreciated that the present invention is equally applicable to a screw having any other shape of head.

The socket 26 includes a square recess 28 defined by four nearly vertical faces 30. As described in greater detail below, the faces 30 taper inwards towards the bottom of the recess 28 and include portions that are at different angles to the vertical. The socket 26 further includes a cross-shaped recess 32, which is integral with the recess 28. The recess 32 has four wings 34, which extend diagonally from the four corners of the square recess 28.

Each of the wings 34 has two generally vertical and parallel side walls 36, 38, and a respective end wall 40. The side walls 36, 38 are vertical, except that they have a slight taper or draft, to allow for free withdrawal of a punch die after punching. As shown in Figure 1, the side walls 36, 38 are continuous with the vertical faces 30 of the square recess 28. Thus, the vertical faces 30 are not continuous with one another, and, unlike conventional screw sockets, they do not extend right into the corners of the square recess 28.

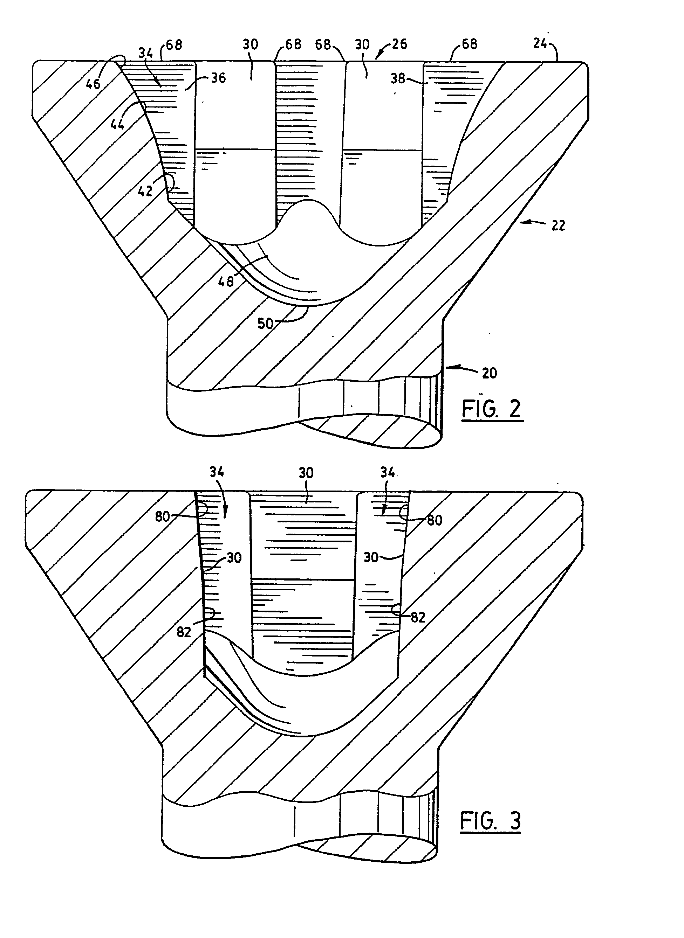

The end walls of the wings are specially shaped, to enable a conventional sized Phillips driver to engage the socket 26. Each end wall 40 is curved, and has a deepest zone 42, that is almost vertical. Each end wall 40 further has a driver engaging zone 44 intermediate along its length, and a relieving zone 46 at the top. These three zones 42, 44 and 46 are continuous with one another and merge smoothly into one another. The driver engaging zone 44 slopes at an angle of, substantially, $26\frac{1}{2}°$ to the vertical, this being the standard angle for a Phillips driver. The relieving zone 46 slopes at an angle that is substantially greater than $26\frac{1}{2}°$. Thus, as shown in Figure 2, the wall 40 is a smooth convex curve without distinct boundaries.

Reference will now be made to Figure 3, which shows details of a first embodiment of the square recess 28. Here, each of the vertical faces 30 comprises an upper portion 80 and a lower portion 82, which are of approximately equal height. The upper portion 80 is inclined at a relatively great angle to the vertical, whilst the lower portion 82 is only inclined at a slight angle to the vertical. Conventional Robertson drivers have faces which are at an angle of 2°30'—3° to the vertical. The upper and lower portions 80, 82 should have angles chosen, so that a Robertson driver will engage the vertical faces 30 at the junctions between these upper and lower portions 80, 82. Consequently, the upper portion 80 is at an angle of greater than 3° to the vertical, and a preferred maximum angle for the upper portion 80 is 5°. Similarly, the lower portion 82 is at an angle to the vertical less than 3°. The minimum angle for this lower portion 82 is 0°30', with a preferred tolerance on this dimension of ±15 minutes.

As shown in Figure 2, the socket 26 has a bottom 48 which is cone-shape, sloping at 45°. Further, the bottom 48 has a rounded point 50. Such a cone follows the shape of the countersunk head. Other profiles for the bottom 48 can be adopted. The bottom profile should not prevent full penetration of either of the two drivers intended for the socket, and it should not weaken the screw head.

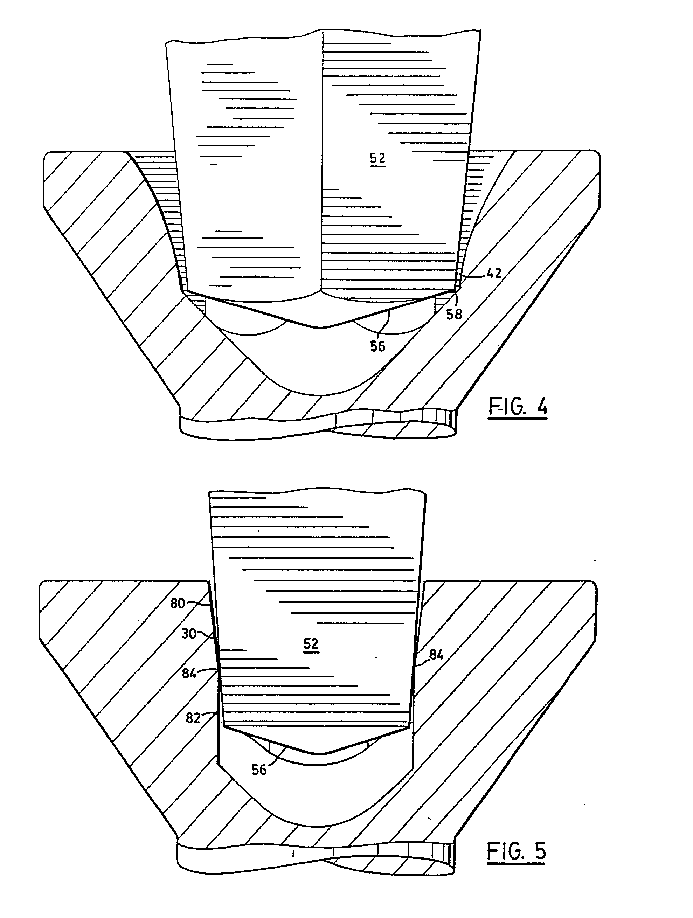

Referring now to Figures 4 and 5, there is shown a standard square driver 52 of the Robertson type, fully engaged in the socket 26. As shown in Figure 5, the fully engaged position occurs when the sides of the driver 52 contact the junctions between the upper and lower portions 80, 82 of each face 30, these junctions being designated 84. Theoretically, there will be a line contact between each face 30 and the corresponding flat of the driver 52, but, in practice, due to resilience and the small angle between the upper and lower portions 80, 82, a substantial area of each face 30 will contact the corresponding flat of the driver 52. As shown in Figure 5, the driver 52 is well clear of the bottom 48 when fully engaged. Also, as shown in Figure 4, when fully engaged, extreme corners 58 of the driver 52 are clear of the end walls 40 of the wings 34, for the full depth of the wings 34.

Conventionally, a Robertson driver wedges into a square socket having a smaller taper angle. This does have the advantage of producing a cling effect, so that a screw once mounted on a driver tends to remain on it, thus facilitating insertion of the screw into a socket. However, this has the disadvantage that the driving torque is applied near the upper surface of the screw. Even if the screw head is uniform, this does not apply the torque at the best part of the screw head. It is better that the stress resulting from the applied torque is applied below the top surface of the screw head. Also, it should be borne in mind that, due to back flow during the punching of the screw head, the material at the top surface might be of a lower density and weaker than the rest of the screw head.

In the recess 28 of the socket 26 of the present invention, the driver 52 contacts the vertical faces 30 at the junctions 84, below the top surface 24. As a consequence, loads applied to the screw head 22 are better applied to it. For the application of a clockwise torque to the screw, a compressive force will be applied at the ends of the junctions 84 indicated at 86 in Figure 1. Thus, this compressive stress will be applied to the faces 30 at the ends 86 of the junction lines 84, which are close to the wings 34 and below the top surface 24. At this location, the screw head 22 should be well able to absorb the compressive loads, whilst clinging to the driver.

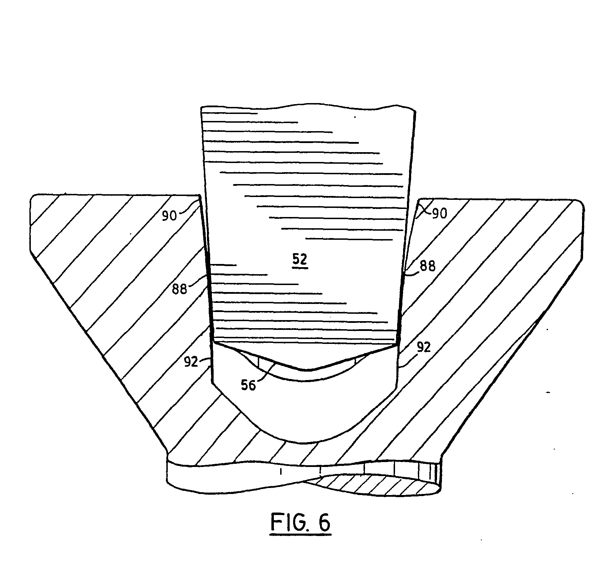

With reference to Figure 6, there is shown a second embodiment of the square recess 28. Here, instead of distinct upper and lower portions, the sides of the recess, here designated 88 curve uniformly. For each side face 88, an upper portion 90 is at an angle to the vertical of greater than 3°, whilst a lower portion 92 is at an angle to the vertical of less than 3°. These side faces 88 will thus behave similarly to the side faces 30 of the first embodiment. As shown in Figure 6 when a standard square driver 52 is inserted, it will contact the faces 88 at mid-points, between the upper and lower portions 90, 92. Thus again the driver 52 will become wedged in the socket below the top surface thereof. It will again be clear of the wings 34 and end walls 40, as shown in Figure 4.

It is to be appreciated that many variations of the profile of the square recess 28 are possible. The essential requirement is that the upper portions of the vertical faces are at a greater angle to the vertical than the side faces of the corresponding square driver, whilst the lower portions of the side faces of the socket are at a smaller angle to the vertical. For example, although Figure 5 shows side faces having two straight portions, as viewed in vertical section, each side face could be comprised of three or more straight sections. For example, each side face could include an intermediate section having an angle of 2°30'—3°. Thus this intermediate section would be at the same angle as a conventional Robertson driver, to give a large surface area for contacting the driver, so as to distribute applied compressive loads. Further, below this intermediate section, a further section could be provided having an angle of 2° ± 15' to give a total of four straight sections or portions. Where the side faces are curved, as viewed in vertical section, the radius should be chosen, to give the desired angles at the top and the bottom.

In a preferred embodiment of the present invention each side face has three portions. An upper or top portion has an angle to the vertical of between 3°30' to 4°, and in any event a maximum angle of 5°. An intermediate section is arranged for contacting side faces of a standard Robertson driver with faces at 2°30'—3° to the vertical. Thus, the intermediate section has faces at an angle in the range 2°30'—3°. A bottom or clearance section has faces at an angle of less than 2° but not less than 0°30'. The intermediate section extends for approximately 50% of the depth of the socket.

This arrangement of the different sections forming the profile of the square recess should give good driving characteristics. A driver will contact the walls of the intermediate section approximately uniformly for half the depth of the square recess 28. As a result the torque applied by a driver will be transmitted uniformly below the top of the socket. The bottom or clearance section is important. During manufacture the end of a punch forming the bottom of the socket tends to wear rapidly. As a result the very bottom of the square recess 28 is likely to be incorrectly formed and to have smaller dimensions than those intended. By providing a clearance section at the bottom, these imperfections should not prevent a driver fully engaging the intermediate section.

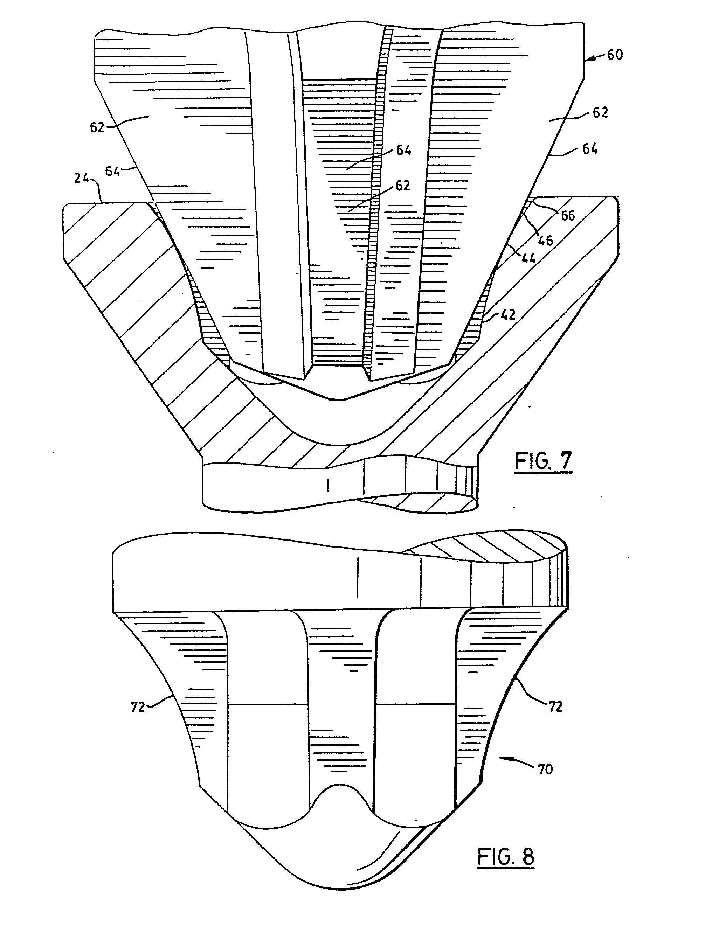

Referring now to Figure 7, there is shown the engagement of a standard cross-point driver 60 in the socket 26. The driver 60 has four driving blades 62 each with an outer edge or surface 64 that slopes at $26\frac{1}{2}°$ to the vertical. As a consequence, when fully engaged, the edges 64 contact the driver engaging zones 44 of the wings 34. As shown, the curved profile of the end walls 40, ensures that the tip of the driver 60 is maintained clear of the bottom 48 of the socket 26. When a torque is applied by the driver 60, it will be transmitted to the appropriate side walls 36 or 38, where contacted by the blades 62. Generally, this torque will be transmitted along the depth of the wings 34, in a manner that ensures that no excessive stress concentrations will arise.

An advantage that arises from the provision of the shaped end walls 40, is the ability of the socket 26 to receive a driving torque from a cross-point or Phillips driver 60, even if the driver is tipped. It can be seen from Figure 6 that the fact that the lower zone 42 is remote from the edge 64 of the blade 62 of the cross-point driver 60 means that the driver 60 may be tipped quite appreciably and yet still be in contact with the driver engaging zone 44. If the driver 60 is tipped to a very large extent, the edge 64 of course contacts the top 66 of the relieving zone 46; very little driving torque can now be transmitted to the screw 20 as the driver 60 tends to come out quite easily.

The provision of the relieving zone 46, which slopes at an angle greater than $26\frac{1}{2}°$, means that the cross-point driver contacts the end wall 60 below the surface 24. It is preferred that the edge 64 of the driver contacts the end wall 40 at the driver engaging zone 44 about $\frac{2}{3}$ or $\frac{3}{4}$ of the way up the end wall 40. If the driver 60 is turned to vigorously to the extent that it digs into the material of the screw 20, then the damage occurs below the surface 24, and any yielding of the screw material brings more material into contact with the driver 60, to relieve the stress concentration. The advantage therefore arises when the driver 60 is turned too vigorously, the tendency is for the resulting damage to be self-correcting, in that it does not spoil the fit of the driver in the socket. This should be contrasted with the behaviour if the driver 60 were to contact the very top edge 66 of the end wall 40. Any damage suffered now inevitably involves the removal of the sharp corners of the top edge 66, and a shallow angle at this edge increases the tendency of the driver to cam out. Thus if the contact is at the top edge 60, rather than below the top surface 24, over vigorous turning of the driver 60 causes damage which tends to exacerbate the camming out effect, not to correct it. Similarly, for the square recess 28, any yielding of the material of the socket 26 tends to be self-correcting and to bring more material into contact with a square driver.

In the embodiment shown, the provision of the smoothly curved end wall 40 means that the material of the screw flows smoothly around the punch with only a minimum of interference to that smooth flow. Thus the material can flow to the very top edges 68 of the side walls 36, 38 more easily than if the shape of the end wall 40 contained marked changes of section or direction. Since the material at these edges 68 arrived there by back-flow during the punching process, the density of the material at the edges 68 can easily be low; a tendency which is kept to a minimum by the smoothly curved end wall 40. Thus, even if the driver 60 should contact the top edge 68, that edge is strong and hard and will resist damage.

If a Phillips screw driver is turned so hard in a screw socket that a failure occurs, the mode of failure is usually that the cross-slot is reamed out to a mere cone. If that happens, the screw can neither be removed nor tightened except with great difficulty. The mode of failure with an overtightened Robertson driver however is usually that the screw shank breaks; ie. the socket is not the weakest part of the screw. For mass production it is usually assessed that the Phillips failure mode is the better, since at least it does give a reliably tightened structural connection if failure occurs. The advantage of the invention here is that the screw may be tightened to the destruction by reaming of the cross-slot part of the socket, but the square recess is left relatively unharmed, so that the screw may be removed subsequently with a square driver. The extra driving power of the square socket is normally a benefit of course, except in mass production, and even in mass production if control of the tightening torque can be relied on.

The profile of the socket 26, and the manner in which it engages the respective drivers, is tolerant of considerable imperfections. It is expected that it will not be necessary to adhere to the close tolerancs often required for other screw socket designs. As discussed above, for both Robertson and Phillips drivers, the drivers contact the socket 26 well below the top surface 24. If there are any imperfections in the tolerances on the socket 26, then the point of engagement for the two drivers will simply be displaced slightly, without significantly affecting the engagement of the drivers. If there is excessive plate build-up, after plating of screws, then the drivers should still be able to engage the socket 26 properly, although they will not engage quite as deeply as for an accurately dimensioned screw. The remoteness of the zones 42 of the wings 34, and the suggested profile for the faces 30 of the square recess assist in containing dirt or plate build-up, whilst still enabling full engagement of the drivers.

In Figure 8, there is shown a master punch for producing sockets 26. Following the usual practice for making screw sockets, several female impressions are taken of the master, though not enough to damage it. These females are then used to produce batches of working punches, which actually punch the sockets in the screws. Both the master and working punches have to be very hard which means they can also be brittle. Any slight free play in the guides in the punching press can joggle the punch and cause it to snap off, if it is too brittle. The provision of buttresses 72 on the punch, which form the wings 34, tends to strengthen the punch 70 and render it less vulnerable to brittle fractures.

It should be understood that the term "screw" used in this spcification, including the claims, is a broad one. It includes, for example, wood screws or self-tapping screws in which the threaded portion of the screw tapers to a point, or machine bolts in which the threaded portion is parallel and which terminates in a flat end. The screw may have a countersunk head, or a head of another configuration, or no head at all if it is a grub screw.

## Claims

1. A screw having a combined driving socket adapted to receive individually both a square, Robertson driver, and a cross-point, Phillips driver, the Robertson and Phillips drivers being of standard sizes conventionally associated with the screw size, the combined driving socket comprising, in vertical position of the screw, four nearly vertical side faces (30; 88) that together define a square recess (28) adapted to receive the square, Robertson driver, said socket also having four wings (34) disposed diagonally with respect to the square recess and extending outwardly from the corners of the square recess, each of the wings being defined by a pair of nearly vertical and generally parallel side walls (36, 38) and a curved end wall (40), each of which curved end walls is convex and has deepest zone (42) that is nearly vertical, a relieving zone (46) adjacent the top of the socket that is at an angle to the vertical substantially greater than $26\frac{1}{2}°$, and a driver-engaging zone (44) intermediate the deepest and relieving zones, which driver engaging zone is at an angle of substantially $26\frac{1}{2}°$ to the vertical, whereby the wings define a cross-slot shaped recess adapted to receive a standard cross-point Phillips driver with the blades of the driver contacting the driver-engaging zones of the end walls, the profile of the cross-slot shaped recess permitting ready disengagement of the Phillips driver, and, when such a standard cross-point Phillips driver is at a small angle to the axis of the screw, the curved end walls enable positive engagement of that driver with its blades contacting the end walls of the wings, characterised in that each of said four side faces (30; 88) of the square recess (28) has an upper portion that is at a greater angle to the vertical than the side faces of a conventional Robertson driver and a lower portion that is at a smaller angle to the vertical than the side faces of a conventional Robertson driver, whereby, in use, the Robertson driver will engage the side faces part-way along their height.

2. A screw as claimed in Claim 1, wherein each face (88) of the square recess (28), as viewed in vertical section, is a continuous curve.

3. A screw as claimed in claim 2, wherein each face (88) of the square recess (28), as viewed in vertical section is a continuous curve of constant radius.

4. A screw as claimed in claim 1, wherein each face (30) of the square recess (28) comprises an upper planar portion (80) and a lower planar portion (82) which meet along a junction line, intended for contacting a Robertson driver.

5. A screw as claimed in claim 4, wherein, for each face (30) of the square recess, the upper planar portion (80) is inclined at an angle of up to 5° to the vertical and the lower planar portion (82) is inclined at an angle of down to 0.5° to the vertical.

6. A screw as claimed in claim 1, wherein each face defining the square recess comprises an upper planar portion, an intermediate planar portion and a lower planar portion, the intermediate planar portion extending between the upper and lower planar portions and being at an angle to the vertical which is between the angles to the vertical of the upper and lower planar portions.

7. A screw as claimed in claim 6, wherein the intermediate planar portion of each face is at an angle of 3° to the vertical.

8. A screw as claimed in claim 6 or claim 7, wherein the intermediate planar portion extends for 50% of the depth of square recess.

9. A screw as claimed in claim 6 or claim 7, wherein each face additionally includes a fourth, planar portion, extending between the intermediate and lower planar portions.

10. A screw as claimed in claim 9, wherein, for each face, the fourth planar portion is at an angle of 2° to the vertical.

11. A screw as claimed in any one of claims 6 to 10, wherein, for each face, the upper planar portion is at an angle to the vertical in the range 3°30'—4°, and the lower planar portion is at an angle to the vertical of less than 2°.

12. In combination a screw as claimed in any one of the preceding claims, and a Robertson driver of the size associated with that screw for engagement in the square recess.

13. In combination a screw as claimed in any one of claims 1 to 11, and a Phillips driver of the size associated with that screw for engagement with the cross-slot shaped recess.

14. In combination a screw as claimed in any one of claims 1 to 11, a Robertson driver of the size associated with that screw, and a Phillips driver of the size associated with that screw, whereby, either one of the drivers can be engaged with the square recess or the cross-slot shaped recess respectively.

15. A punch shaped for punching a socket in a screw as claimed in any one of claims 1 to 11.

## Patentansprüche

1. Schraube mit einer kombinierten Schraubenantriebsausnehmung, die zur individuellen Aufnahme sowohl eines quadratischen Schraubendrehers (Robertson-Schraubendreher) als auch eines Kreuzschlitzschraubendrehers (Phillips-Schraubendreher) geeignet ist, wobei beide Typen von Schraubendrehern (der Robertson- und der Phillips-Schraubendreher) die Standardabmessungen aufweisen, die in üblicher Weise der Schraubengröße zugeordnet sind, wobei die kombinierte Antriebsausnehmung — bei vertikaler Position der Schraube — vier nahezu vertikale Seitenflächen (30; 88) aufweist, die zusammen eine quadratische Ausnehmung (28) definieren, die geeignet ist, den quadratischen Schraubendreher (Robertson-Schraubendreher) aufzunehmen, wobei die Ausnehmung ferner vier Flügel (34) aufweist, welche bezüglich der quadratischen Ausnehmung diagonal angeordnet sind und sich von den Ecken der quadratischen Ausnehmung nach außen erstrecken, wobei jeder der Flügel durch ein Paar von nahezu vertikalen und im wesentlichen parallelen Seitenwänden (36, 38) und eine gekrümmte Stirnwand (40) definiert ist, wobei jede der gekrümmten Stirnwände konvex ist und eine tiefste Zone (42) besitzt, die nahezu vertikal ist, sowie ein Freigabezone (46) angrenzend an das obere Ende der Ausnehmung, welche bezüglich der Senkrechten unter einem Winkel verläuft, der deutlich größer als 26,5° ist, sowie eine Schraubendrehererfassungszone (44) zwischen der tiefsten Zone und der Freigabezone, wobei die Schraubendrehererfassungszone unter einem Winkel von im wesentlichen 26,5° zur Vertikalen verläuft, so daß die Flügel eine kreuzschlitzförmig ausgebildete Ausnehmung definieren, die zur Aufnahme eines Standard-Kreuzschlitzschraubendrehers (Phillips-Schraubendreher) geeignet ist, wobei die Klingen(elemente) des Schraubendrehers die Schraubendrehererfassungszonen der Stirnwände erfassen, wobei das Profil der kreuzschlitzförmigen Ausnehmung ein bequemes Lösen des Kreuzschlitzschraubendrehers (Phillips-Schraubendreher) gestattet, und wobei die gekrümmten Stirnwände dann, wenn ein derartiger Standard-Kreuzschlitzschraubendreher (Phillips-Schraubendreher) einen kleinen Winkel mit der Achse der Schraube einschließt, ein zwangsläufiges Erfassen dieses Schraubendrehers ermöglichen, wobei dessen Klingen(elemente) die Stirnwände der Flügel erfassen, dadurch gekennzeichnet, daß jede der vier Seitenflächen (30; 88) der quadratischen Ausnehmung (28) einen oberen Teil besitzt, der einen größeren Winkel mit der Vertikalen einschließt als die Seitenflächen eines konventionellen quadratischen Schraubendrehers (Robertson-Schraubendreher) und einen unteren Teil, der einen kleineren Winkel mit der Vertikalen einschließt als die Seitenflächen eines konventionellen quadratischen Schraubendrehers (Robertson-Schraubendreher), wodurch der quadratische Schraubendreher (Robertson-Schraubendreher) im Gebrauch die Seitenflächen auf einem Teilstück ihrer Höhe erfaßt.

2. Schraube nach Anspruch 1, bei der jede Fläche (88) der quadratischen Ausnehmung (28) im vertikalen Schnitt gesehen eine kontinuierliche Kurve ist.

3. Schraube nach Anspruch 2, bei der jede Fläche (88) der quadratischen Ausnehmung (28) im vertikalen Schnitt gesehen eine kontinuierliche Kurve mit konstantem Radius ist.

4. Schraube nach Anspruch 1, bei der jede Fläche (30) der quadratischen Ausnehmung (28) einen oberen ebenen Teil (80) und einen unteren ebenen Teil (82) umfaßt, die sich längs einer Verbindungslinie treffen, die für einen Kontakt mit einem quadratischen Schraubendreher (Robertson-Schraubendreher) gedacht ist.

5. Schraube nach Anspruch 4, bei der für jede Fläche (30) der quadratischen Ausnehmung der obere ebene Teil (80) unter einem Winkel von bis zu 5° und der untere ebene Teil (82) unter einem Winkel von bis herab zu 0,5° gegenüber der Vertikalen geneigt ist.

6. Schraube nach Anspruch 1, bei der jede Fläche, welche die quadratische Ausnehmung definiert, einen oberen ebenen Teil, einen mittleren ebenen Teil und einen unteren ebenen Teil umfaßt, wobei der mittlere ebene Teil sich zwischen dem oberen und dem unteren ebenen Teil erstreckt und bezüglich der Vertikalen unter einem Winkel angeordnet ist, welcher zwischen den Winkeln liegt, welche von dem oberen ebenen Teil und dem unteren ebenen Teil mit der Vertikalen eingeschlossen werden.

7. Schraube nach Anspruch 6, bei der der mittlere ebene Teil jeder Fläche unter einem Winkel von 3° zur Vertikalen geneigt ist.

8. Schraube nach Anspruch 6 oder 7, bei der sich der mittlere ebene Teil über 50% der Tiefe der quadratischen Ausnehmung erstreckt.

9. Schraube nach Anspruch 6 oder 7, bei der jede Fläche zusätzlich einen vierten ebenen Teil umfaßt, der sich zwischen dem mittleren und dem unteren ebenen Teil erstreckt.

10. Schraube nach Anspruch 9, bei der der vierte ebene Teil bei jeder Fläche unter einem Winkel von 2° gegenüber der Vertikalen geneigt ist.

11. Schraube nach einem der Ansprüche 6 bis 10, bei der der obere ebene Teil bei jeder Fläche unter einem Winkel im Bereich von 3°30' bis 4° bezüglich der Vertikalen geneigt ist und bei der der untere ebene Teil unter einem Winkel von weniger als 2° gegenüber der Vertikalen geneigt ist.

12. Kombination einer Schraube nach einem der vorangehenden Ansprüche mit einem quadratischen Schraubendreher (Robertson-Schraubendreher) derjenigen Größe, die dieser Schraube zugeordnet ist, zum Eingreifen in die quadratische Ausnehmung.

13. Kombination einer Schraube nach einem der Ansprüche 1 bis 11 mit einem Kreuzschlitzschraubendreher (Phillips-Schraubendreher) der Größe, die dieser Schraube zugeordnet ist, zum Eingreifen in die kreuzschlitzförmige Ausnehmung.

14. Kombination einer Schraube nach einem

7

der Ansprüche 1 bis 11 mit einem quadratischen Schraubendreher (Robertson-Schraubendreher) der dieser Schraubengröße zugeordneten Größe und mit einem Kreuzschlitzschraubendrehers (Phillips-Schraubendreher) der dieser Schraubengröße zugeordneten Größe, wobei jeder der Schraubendreher in Eingriff mit der quadratischen Ausnehmung bzw. der kreuzschlitzförmigen Ausnehmung bringbar ist.

15. Stanzelement zum Stanzen einer Ausnehmung in einer Schraube nach einem der Ansprüche 1 bis 11.

**Revendications**

1. Vis comportant une douille d'entraînement combinée adaptée pour recevoir individuellement l'un et l'autre d'un tournevis carré Robertson et d'un tournevis cruciforme Phillips, les tournevis Robertson et Phillips étant de dimensions normalisées associées de façon usuelle à la dimension de la vis, la douille d'entraînement combinée comprenant, dans une position verticale de la vis, quatre faces latérales (30, 88) presque verticales qui délimitent ensemble une cavité carrée (28) adaptée pour recevoir le tournevis carré Robertson, ladite douille ayant également quatre ailes (34) disposées en diagonale par rapport à la cavité carrée et s'étendant vers l'extérieur à partir des angles de la cavité carrée, chacune des ailes étant délimitée par deux parois latérales (36, 38) qui sont dans leur ensemble parallèles et presque verticales, et une paroi d'extrémité incurvée (40), chacune desdites parois d'extrémité incurvées étant convexe et ayant une région (42) plus profonde qui est presque verticale, une région (46) de dégagement adjacente au sommet de la douille, qui forme par rapport à la verticale un angle qui est notablement supérieur à 26°½, et une région (44) d'engagement du tournevis entre les régions plus profonde et de dégagement, cette région d'engagement de tournevis formant un angle d'à peu près 26°½ par rapport à la verticale, grâce à quoi les ailes délimitent une cavité formant une fente cruciforme adaptée pour recevoir un tournevis cruciforme Phillips normalisé, les lames du tournevis entrant en contact avec les régions d'engagement de tournevis des parois d'extrémité, le profil de la cavité cruciforme permettant un désengagement aisé du tournevis Phillips, et, lorsqu'un tel tournevis cruciforme Phillips normalisé se trouve former un petit angle par rapport à l'axe de la vis, les parois d'extrémité incurvées permettent un engagement positif de ce tournevis avec ses lames en contact avec les parois d'extrémité des ailes, caractérisée en ce que chacune desdites quatre faces latérales (30, 88) de la cavité carrée (28) présente une portion supérieure qui forme avec la verticale un angle plus grand que les faces latérales d'un tournevis Robertson classique, et une partie inférieure qui forme, par rapport à la verticale, un angle plus petit que celui formé par les faces latérales d'un tournevis Robertson classique, grâce à quoi, en service, le tournevis Robertson vient en contact avec les faces latérales en un point intermédiaire sur leur hauteur.

2. Vis suivant la revendication 1, dans laquelle chaque face (88) de la cavité carrée (28), considérée en section verticale, est une courbe continue.

3. Vis suivant la revendication 2, dans laquelle chaque face (88) de la cavité carrée (28), considérée en section verticale, est une courbe continue de rayon constant.

4. Vis suivant la revendication 1, dans laquelle chaque face (30) de la cavité carrée (28) comprend une partie supérieure plane (80) et une partie inférieure plane (82) qui se rejoignent le long d'une ligne de jonction destinées à venir en contact avec un tournevis Robertson.

5. Vis suivant la revendication 4, dans laquelle, pour chaque face (30) de la cavité carrée, la portion supérieure plane (80) est inclinée d'un angle pouvant s'élever jusqu'à 5° par rapport à la verticale, et la portion inférieure plane (82) est inclinée suivant un angle pouvant descendre jusqu'à 0,5° par rapport à la verticale.

6. Vis suivant la revendication 1, dans laquelle chaque face délimitant la cavité carrée comprend une portion supérieure plane, une portion intermédiaire plane et une portion inférieure plane, la portion intermédiaire plane s'étendant entre les portions planes supérieure et inférieure et formant par rapport à la verticale un angle qui est compris entre les angles par rapport à la verticale des portions planes supérieure et inférieure.

7. Vis suivant la revendication 6, dans laquelle la portion intermédiaire plane de chaque face forme un angle de 3° par rapport à la verticale.

8. Vis suivant la revendication 6 ou 7, dans laquelle la portion intermédiaire plane s'étend sur 50% de la profondeur de la cavité carrée.

9. Vis suivant la revendication 6 ou 7, dans laquelle chaque face comprend en outre une quatrième portion plane s'étendant entre les portions planes intermédiaire et inférieure.

10. Vis suivant la revendication 9, dans laquelle pour chaque face, la quatrième portion plane forme un angle de 2° par rapport à la verticale.

11. Vis suivant l'une quelconque des revendications 6 à 10, dans laquelle, pour chaque face, la portion supérieure plane forme par rapport à la verticale un angle qui est compris dans la plage de 3°30' à 4°, et la portion inférieure plane forme un angle de moins de 2° par rapport à la verticale.

12. La combinaison d'une vis suivant l'une quelconque des revendications précédentes et d'un tournevis Robertson de la dimension associée à cette vis pour coopérer avec la cavité carrée.

13. La combinaison d'une vis suivant l'une quelconque des revendications 1 à 11, et d'un tournevis Phillips de la dimension associée à cette vis pour coopérer avec la cavité formant une fente cruciforme.

14. La combinaison d'une vis suivant l'une quelconque des revendications 1 à 11, d'un tournevis Robertson d'une dimension associée à celle de la vis, et d'un tournevis Phillips d'une dimension associée à celle de cette vis, grâce à quoi l'un et l'autre des tournevis peut être engagé en prise avec la cavité carrée ou la cavité cruciforme respectivement.

15. Poinçon conformé pour matricer une douille dans une vis suivant l'une quelconque des revendications 1 à 11.

FIG. 1

1

FIG. 2

FIG. 3

2

FIG. 4

FIG. 5

FIG. 6

FIG. 7

FIG. 8